# EUROPEAN PATENT SPECIFICATION

(11) **EP 0 969 602 B1**
(45) Date of publication and mention of the grant of the patent: **27.12.2006**
(21) Application number: 98112402.7
(22) Date of filing: 03.07.1998
(51) Int. Cl.: H04B 1/40

(54) **Dual band transceiver**
Zweibandsendeempfänger
Emetteur-récepteur à deux bandes

(43) Date of publication of application: 05.01.2000
(73) Proprietor: Sony Deutschland GmbH, 10785 Berlin (DE)
(72) Inventor: Brankovic, Veselin, Dr.-Ing., c/o Sony I.(Eur)GmbH, 70736 Fellbach (DE)
(74) Representative: Körber, Martin Hans

(56) References cited:
- EP-A- 0 739 090
- US-A- 5 564 076
- US-A- 5 732 330

## Description

The present invention relates to a dual band transceiver and a dual band transmission method.

The development of high data rate communication system is targeting high data rate applications. Particularly the frequency bands in the microwave range and in the MM-wave range are recently gaining a lot of interest. Private (non-licensed) frequency bands offer a wide variety of possible commercial applications. For example, there are available frequency bands in the range of about 800 MHz, 2.4 GHz, 5-6 GHz, about 10 GHz, 24 GHz and 59-64 GHz, which can be considered more or less as license free (private) frequency bands or ISM (industrial, scientific, medical) bands. For the ISM-bands some limitations, as for example, regarding the power level are existing.

Regarding the propagation properties all frequency bands can be classified regarding the radio propagation and practical applications as frequency bands which can offer:
a) NLOS (non-line of sight) and LOS (line on sight) communication
b) predominantly only LOS (line on sight) communication.

This means that frequency bands at larger frequency (usually greater than 10 GHz) due to the physical attenuation and limited available or permitted power are able to have a satisfactory communication only in a LOS scenario or highly reflected short range scenario. Therefore there is a need for a transceiver technique adapted for a transmission in at least two different bands, wherein one of the frequency bands should provide for a NLOS transmission and the other one should provide for a LOS transmission.

In the state of the art dual and transmission techniques are known. However, according to these known techniques the difference between the two frequency bands is hardly larger than 20% of the central frequency, and in the most cases the difference is less than 5%.

US-A-5 564 076 discloses a dual mode portable digital radio transceiver for communication via a terrestrial network (first mode) and via a satellite network (second mode) synthesizing a modulation first frequency for modulation of signals transmitted in both modes and a conversion second frequency for demodulation of signals received in the two modes. This known transceiver divides the conversion second frequency supplying a conversion third frequency for demodulation of signals received in one of the modes using a signal receive frequency band far away from the other frequency bands used. In the case of transmission the same means transmitting both modes with no duplication of components. Only demodulation frequencies supplied by an oscillator is adjusted to the specific frequency of the transmission mode in use.

GB-A-2 173 660 discloses a paging receiver including a superheterodyne circuit with a mixer for mixing a first frequency received signal from an antenna with a signal from a local oscillator. An intermediate frequency signal of the paging receiver appears at the output of the mixer and either this signal or a second received signal from another antenna at the same frequency as the intermediate frequency signal is further amplified and decoded depending on the setting of a switch. The switch can be automatically responsive to an area wide transmission by causing the on-site reception to be disabled by the operation of an out-of-range warning circuit.

From US-A-5 640 694 an integrated RF system with segmented frequency conversion is known.

GB-A-2 312 107 discloses a multi-band receiver and quadrature demodulator with selectable local oscillator. Thereby a receiver may receive one of two bands depending on the position of a switch. This intermediate frequency switch is responsive to a switching control signal indicative of which radio frequency bands the corresponding mobile unit is operating for outputting a first intermediate frequency signal corresponding to a first mobile communication system and outputting a second intermediate frequency signal corresponding to another communication system.

EP-A-633 705 discloses a multi-band cellular radio-telephone system architecture. This dual frequency cellular radio-telephone system has different service providers and serving mobile subscribers at first and second distinct frequency ranges, and using frequency conversion techniques to serve both frequency ranges.

EP-A-739 090 discloses a dual band transceiver using frequency conversion techniques to serve both frequency ranges.

Therefore, it is the problem of the present invention to provide for a dual band transceiving technique allowing a transmission in two different frequency bands, wherein one frequency band should provide for a LOS communication and the other frequency band should provide for a NLOS communication.

Thereby it is the central idea of the present invention that the lower frequency band (NLOS communication) is set such as to be an intermediate frequency of the higher frequency band (LOS communication) and that modulation parameters are changed in correspondence to a change of the transmission frequency band.

According to the present invention therefore a dual band transceiver is proposed. The dual band transceiver according to the present invention comprises a baseband block, at least one frequency converting block as well as at least one antenna or antenna system. The frequency converting block thereby is connected between the baseband block and at least one antenna and converts an intermediate frequency output of the baseband block or output by another frequency converting block to another intermediate frequency. Thereby a first transmission frequency band of the dual band receiver corresponds to the intermediate frequency and a second transmission frequency band is obtained as an output signal of the frequency converting block. With other words, the two largely different frequency bands are obtained by switching on/off a frequency converting block. Thus at least one frequency converting block is necessary for implementing the present invention. The control unit is furthermore connected to the baseband block to be able to change modulation parameters of the baseband block simultaneously to the switching between the first transmission frequency band and the second transmission frequency band.

A switch can be provided upwardly of the first frequency converting block, wherein the switch is controlled by a control unit such that selectively either a signal in the first transmission frequency band or the second transmission frequency band is transmitted/received. With other words, said switch effects the switching on/off of at least one frequency converting block.

The control unit can control the switch on the basis of channel characteristics, a bit error rate of the transmission and/or user preferences. Thus the transmission frequency band can be selected on the basis of the condition of the air interface.

The first transmission frequency band can be below 10 GHz and the second transmission frequency band can be higher than 10 GHz.

The first transmission frequency band can be between 5 and 6 GHz and the second transmission can be in the range of 24 GHz, 40 Ghz or 60 GHz.

A second switch can be provided to control the modulation depth used by the baseband block, wherein the control unit is adapted to control the second switch simultaneously to the switch.

The control unit can be adapted to change the modulation technique used by the baseband block in accordance with the change of the transmission frequency band used.

The control unit can be adapted to control the baseband block such that a (D)8PSK or a (D)QPSK modulation (f.e. of OFDM carriers) is used when the control unit controls the switch such that the first transmission frequency band is used.

The control unit can be adapted to control the baseband block such that a (D)8PSK, (D)QPSK, 16QAM or 64QAM modulation (f.e. of OFDM carriers) is used when the control unit controls the switch such that the second transmission frequency band is used.

The control unit controls the second switch and the switch such that the resulting transmission channel band width remains constant.

A third switch can be provided to control the power level of the first and/or second frequency converting block, wherein the third switch is controlled by the control unit.

The baseband block can be adapted to operate according to an OFDM modulation technique.

Different antennas or antenna systems can be provided to be used respectively when the first or the second transmission frequency band is used.

According to the present invention furthermore a dual band transmission method is proposed. The method according to the present invention comprises the step of modulation of data to be transmitted on a first intermediate frequency to obtain a modulated signal, in a baseband block. The modulated signal with a first intermediate frequency is upconverted at least once to a second intermediate frequency. Then the modulated upconverted signal is transmitted in a first or second transmission frequency band. Thereby the first transmission frequency band is an intermediate frequency of the second transmission frequency band. A switching between the first transmission frequency band and the second transmission frequency band can be effected simultaneously to a change of modulation parameters of the baseband block.

The upconversion step (s) can be selectively controlled such that selectively either a signal in the first transmission frequency band or the second transmission frequency band is transmitted.

The step of selectively controlling thereby can be effected on the basis of channel characteristics, a bit error rate of transmission and/or user preferences.

The first transmission frequency band thereby can be below 10 GHz and the second transmission frequency band can be higher than 10 GHz.

The first transmission frequency band can be between 5-6 GHz and the second transmission frequency band can be 24 GHz, 40 GHz or 60 GHz.

The baseband block can be controlled such the modulation depth used by the baseband block is changed simultaneously to the selective control of the upconversion step (s).

A control of the baseband block can be effected such that the modulation technique used by the baseband block is changed in accordance with a change of a transmission frequency band used.

The control of the baseband block is effected such that a (D)8PSK or (D)QPSK modulation (f.e. of OFDM carriers) is used when the first transmission frequency band (RF1) is used for the transmission.

The control of the baseband block can be effected such that a (D)8PSK, (D)QPSK, 16QAM or 64QAM modulation (f.e. of OFDM carriers) is used when the second transmission frequency band (RF2) is used for the transmission.

The control of the baseband block and the control of the upconversion step (s) can be effected such that the resulting transmission channel bandwidth remains constant.

The power level of at least one upconversion step can be controlled.

The baseband block can operate according to an OFDM modulation technique.

Different antennas can be used respectively when the first or the second transmission frequency band is used.

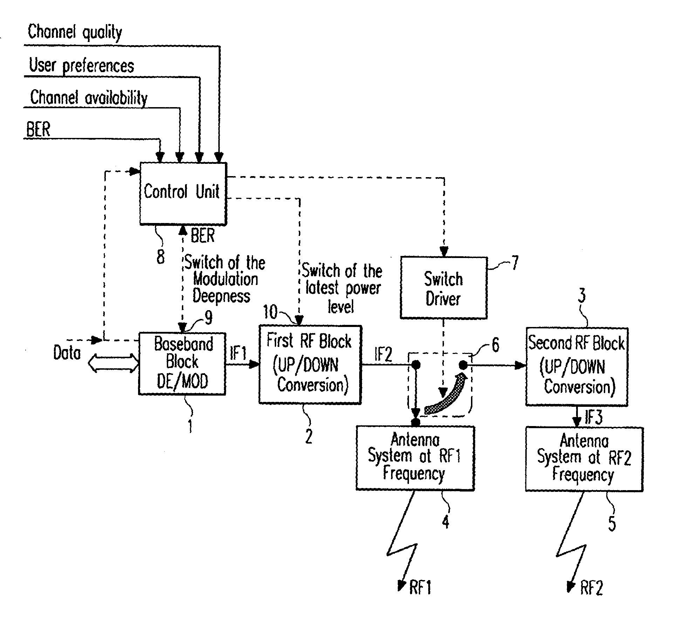

An embodiment of the present invention will now be explained with reference to the enclosed figure of the drawings.

The figures show schematically a dual band transceiver according to the present invention. Data to be transmitted are input to a baseband block 1 modulating the data on a first intermediate frequency IF1. The modulated data with the frequency IF1 are input to a first RF upconversion block 2. The first RF upconversion block converts the carrier frequency of the modulated data from IF1 to the frequency IF2. The modulated data with the carrier frequency of IF2 are input to a first switch 6. Depending on the position of the switch 6 the modulated data with the carrier frequency IF2 are input either to an antenna system 4 for a transmission of the modulated data over the air, wherein the transmission frequency band RF1 in this case corresponds to the intermediate frequency IF2. In the other position of the switch 6 the modulated data with the intermediate carrier frequency 2 are input to a second RF upconversion block 3. The second RF upconversion block 3 converts the carrier frequency of the modulated data from IF2 to IF3, wherein IF3>IF2. The modulated data output by the second RF upconversion block 3 with the carrier frequency of IF3 are then supplied to a second antenna system 5 to be transmitted over the air, wherein the transmission frequency band RF2 corresponds to the intermediate frequency IF3 generated by the second upconversion block 3.

The switch 6 is controlled by a switch driver 7, which is controlled by a control unit 8. The control unit 8 therefore can select by means of the switch driver 7 and the switch 6, whether the transmission over the air is effected in the first transmission frequency band RF1 or in the other transmission frequency band RF2. Therefore the control unit 8 can command a switching on/off of a frequency converting block and thus select the transmission frequency band to be used.

The control unit 8 furthermore controls the baseband block by means of a switch input 9. The control unit 8 therefore can selectively change the modulation technique and/or the modulation depth used by the baseband block 1. The control unit 8 furthermore can control the power level generated by the upconversion block 2 by means of a switch input 10.

The control unit 8 is supplied with a plurality of information, which information is the base for the simultaneous switch operation controlled by the control unit 8, i. e. the control of the switch 9 of the modulation depth/modulation technique, the switch 10 for the power level and the switch driver 7 for the switch 6 changing the transmission frequency bands RF1, RF2. The information supplied to the control unit 8 can, for example, comprise information regarding the channel quality, user preference, channel availability and the bit error rate (BER) of the present transmission.

The main advantage of the inventive technique is that a dual band transceiver structure is presented with an ability to switch from one to another frequency band, wherein the lower frequency band (RF1) is actually an intermediate frequency of the higher frequency RF2. The lower frequency RF1 can be for example lower than 10 GHz.

According to the usual up/downconversion requirements and in order to minimise higher intermodulation products and images, the lower frequency RF1 is advantageously chosen to be in a special ratio compared to the higher frequency RF2, which is usually higher than 50%. According to this issue, a larger frequency RF2 can be chosen to be in the frequency range larger than 10 GHz which corresponds to a LOS (line of sight) application scenario. The inventive concept has the advantage that in the case of a LOS operation scenario, wherein two communication devices comprising a dual band transceiver according to the present invention "see" each other, a communication device can switch automatically to operate at the largest available frequency (e. g. at RF2).

Due to the larger frequency communication the communication device can afford to have a high gain antenna 5, which is due to the smaller geometrical size of the antenna elements at higher frequencies. Due to the fact that a LOS channel is available, possible higher gain antennas are available and physical attenuation of the reflected waves is very large, the characteristics of the LOS channel has more advantages compared to the NLOS (non-line of sight) channel. Therefore the communication device comprising a dual band transceiver according to the present invention can increase the modulation depth controlled by the control unit 8 and can operate with a higher spectral efficiency simultaneously increasing the user data rate. If the user is moving around a corner and there is no longer a LOS(line of sight)- communication, the control unit 8 will detect, for example, by means of the supplied channel quality information that the channel quality is getting worse or even cut off.

If the channel qualities get worse, also the BER (bit error rate) figure of merit coming from the baseband block as an alternative, can be a base for the control unit 8 to decide to change the transmission rate of the frequency band from RF2 to RF1. Therefore the control unit 8 can decide to switch off the highest frequency block 3 and to operate with a lower frequency (RF2) as a final front-end stage. Therefore inherently NLOS communication can be provided, meaning for example that radio waves in the case of the in-door communication can pass through walls. In that case the modulation depth can be reduced, wherein the channel band width will be maintained constant. But even at a smaller data rate the user can maintain to communicate and the communication will not be cut off completely.

Preferred values for the lower frequency RF1 are for example 800 MHz, 2.4 GHz and 5-6 GHz. The upper frequency RF2 can correspondingly take one of the values 10 GHz, 17 GHz, 24 GHz and 60 GHz. A particularly preferred frequency ratio is the case that RF1 takes a value between 5-6 GHz and RF2 takes a value between 24 and 60 GHz, which is particularly advantageous for applications in in-door communication-private short range application, where very large data rates are targeted.

According to the present invention, the communication system comprising a dual band transceiver according to the present invention can be designed such that a constant band width in the range from 20 to 30 MHz is approached. For this channel a high data rate OFDM technology can be used. The modulation of the OFDM subcarriers in the case of the NLOS communication (frequency RF1) can be a (D)8PSK or (D)PSK modulation. In the case of a LOS communication (utilising transmission frequency band RF2) a 16QAM, (D)16PSK or 64QAM modulation can be used. In this case, the air data rate can be spread up to 90MB/s for the transmission frequency band RF1 (NLOS scenario) and can increase up to 150MB/s when the transmission frequency band RF2 is used (LOS scenario), when the band width is always kept constant.

As it is shown in the enclosed figure for the different transmission frequency bands RF1, RF2 a plurality of respectively different antennas 4, 5 can be provided, wherein the antennas 4,5 can respectively have one or more antenna elements and the antennas 4,5 can be adaptive antennas or smart antennas.

## Claims

1. Dual band transceiver, comprising
- a baseband and modulation block (1),
- at least a first frequency converting block (2, 3), and
- at least one antenna (4, 5) for transmitting in a first or a second transmission frequency band (RF1, RF2), wherein the first transmission frequency band (RF1) of the dual band transceiver corresponds to the intermediate frequency (IF2) of the second transmission frequency band (RF2),
**characterized in that**
- the first frequency converting block (2) is connected between the baseband and modulation block (1) and at least one antenna (4, 5) and is adapted to convert a first intermediate frequency (IF1) output from the baseband and modulation block (1) to the intermediate frequency (IF2) of the second transmission frequency band (RF2), and
- a control unit (8) is provided to control a switching between the first transmission frequency band (RF1) and the second transmission frequency band (RF2) and the control unit (8) is connected to the baseband and modulation block (1) to be able to change modulation parameters of the baseband and modulation block (1) simultaneously to the switching between the first transmission frequency band (RF1) and the second transmission frequency band (RF2),
the first transmission frequency band (RF1) being a non-line-of-sight band and the second transmission frequency band (RF2) being a line-of-sight band, where the line-of-sight transmission can sustain a higher data rate than the non-line-of-sight transmission.

2. Dual band transceiver according to claim 1,
**characterized in that**
a first switch (6) is provided downwardly of the first frequency converting block (2), wherein the first switch (6) is controlled by the control unit (8) such that selectively either a signal in the first transmission frequency band (RF1) or the second transmission frequency band (RF2) is transmitted/received.

3. Dual band transceiver according to claim 2,
**characterized in that**
the control unit (8) is adapted to control the first switch (6) on the basis of channel quality, channel availability, the bit error rate of the transmission and/or user preferences.

4. Dual band transceiver according to anyone of the preceding claims,
**characterized in that**
the first transmission frequency band (RF1) is below 10 GHz and the second transmission frequency band (RF2) is higher than 10 GHz.

5. Dual band transceiver according to claim 4,
**characterized in that**
the first transmission frequency band (RF1) is 800 MHz, 2.4 GHz or between 5 and 6 GHz and the second transmission frequency band (RF2) is 17 GHz, 24 GHz, 40 GHz or 60 GHz.

6. Dual band transceiver according to anyone of the preceding claims,
**characterized in that**
a second switch (9) is provided to control the modulation technique used by the baseband and modulation block (1),
wherein the control unit (8) is adapted to control the second switch (9) simultaneously to the first switch (6).

7. Dual band transceiver according to anyone of the preceding claims,
**characterized in that**
the control unit (8) is adapted to change the modulation technique used by the base band block (1) in accordance with a change of the transmission frequency band (RF1, RF2) used.

8. Dual band transceiver according to claim 7,
**characterized in that**
the spectral efficiency of the transmission in the first transmission frequency band (RF1) is higher than the spectral efficiency of the transmission the second transmission frequency band (RF2).

9. Dual band transceiver according to claim 7 or 8,
**characterized in that**
the control unit (8) is adapted to control the baseband and modulation block (1) such that a (D)8PSK or (D)QPSK modulation is used when the control unit (8) controls the switch (6) such that the first transmission frequency band (RF1) is used.

10. Dual band transceiver according to anyone of claims 7 to 9,
**characterized in that**
the control unit (8) is adapted to control the baseband and modulation block (1) such that a (D)8PSK, (D)QPSK, 16QAM or 64QAM modulation is used when the control unit (8) controls the switch (6) such that the second transmission frequency band (RF2) is used.

11. Dual band transceiver according to anyone of claims 7 to 10,
**characterized in that**
the control unit (8) is adapted to control the second switch (9) and the switch (6) such that the resulting transmission channel bandwidth remains constant.

12. Dual band transceiver according to anyone of the preceding claims,
**characterized in that**
a third switch (10) is provided to control the power level of at least one of the frequency converting blocks (2, 3), wherein the third switch (10) is controlled by the control unit (8).

13. Dual band transceiver according to anyone of the preceding claims,
**characterized in that**
the baseband and modulation block (1) is adapted to operate according to an OFDM modulation technique.

14. Dual band transceiver according to anyone of the preceding claims,
**characterized in that**
different antenna systems (4, 5) are provided to be used respectively when the first or the second transmission frequency band (RF1, RF2) is used.

15. Dual band transceiver according to claim 14,
**characterized in that**
the different antenna systems (4, 5) comprise different antenna gains.

16. Dual band transmission method,
comprising the following steps of:
- modulation (1) of data to be transmitted on a first intermediate frequency (IF1) to obtain a modulated signal, in a baseband and modulation block (1), and
- transmission (4, 5) of the modulated signal in a first or a second transmission frequency band (RF1, RF2), wherein the first transmission frequency band (RF1) is an intermediate frequency (IF2) of the second transmission frequency band (RF2)
**characterized by**
- at least one upconversion (2, 3) of the modulated signal with the first intermediate frequency (IF1) to a second intermediate frequency (IF2), and
- a switching between the first transmission frequency band (RF1) and the second transmission frequency band (RF2), the switching being performed simultaneously to a change of modulation parameters of the baseband and modulation block (1),
the first transmission frequency band (RF1) being a non-line-of-sight band and the second transmission frequency band (RF2) being a line-of-sight band, where the line-of-sight transmission can sustain a higher data rate than the non-line-of-sight transmission.

17. Dual band transmission method according to claim 16,
**characterized by** the step of
selectively controlling (6, 8) the upconversion step(s) such that selectively either a signal in the first transmission frequency band (RF1) or the second transmission frequency band (RF2) is transmitted.

18. Dual band transmission method according to anyone of the claims 16 or 17,
**characterized in that**
the step of selectively controlling (6, 8) is effected on the basis of channel quality, channel availability, the bit error rate of the transmission and/or user preferences.

19. Dual band transmission method according to anyone of claims 16 to 18,
**characterized in that**
the first transmission frequency band (RF1) is below 10 GHz and the second transmission frequency band (RF2) is higher than 10 GHz.

20. Dual band transmission method according to claim 19,
**characterized in that**
the first transmission frequency band (RF1) is 800 MHz, 2.4 GHz or between 5 and 6 GHz and the second transmission frequency band (RF2) is 17 GHz, 24 GHz, 40 GHz or 60 GHz.

21. Dual band transmission method according to anyone claims 16 to 20,
comprising the step of
controlling (8, 9) the baseband and modulation block (1) such that the modulation technique used by the baseband and modulation block (1) is changed simultaneously to the selective control (6, 8) of the upconversion step (s).

22. Dual band transmission method according to anyone of claims 16 to 21,
**characterized in that**
a control (8, 9) of the baseband and modulation block (1) is effected such that the modulation technique used by the base band block (1) is changed in accordance with a change of the transmission frequency band (RF1, RF2) used.

23. Dual band transmission method according to claim 22,
**characterized in that**
the control (8, 9) of the baseband and modulation block (1) is effected such that a (D)8PSK or (D)QPSK modulation is used when the first transmission frequency band (RF1) is used for the transmission.

24. Dual band transmission method according to anyone of claims 22 or 23,
**characterized in that**
the control (8, 9) of the baseband and modulation block (1) is effected such that a (D)8PSK, (D)QPSK, 16QAM or 64QAM modulation is used when the second transmission frequency band (RF2) is used for the transmission.

25. Dual band transmission method to anyone of claims 21 to 24,
**characterized in that**
the control (8, 9) of the baseband and modulation block (1) and the control (6, 8) of the upconversion step(s) is effected such that the resulting transmission channel bandwidth remains constant.

26. Dual band transmission method according to anyone of claims 16 to 25,
**characterized by** the step of
controlling (10) the power level of an upconversion step (2, 3).

27. Dual band transmission method according to anyone of claims 16 to 26,
**characterized in that**
the baseband and modulation block (1) operates according to an OFDM modulation technique.

28. Dual band transmission method according to anyone of the claims 16 to 27,
**characterized in that**
different antennas (4, 5) are used respectively when the first or the second transmission frequency band (RF1, RF2) is used.

## Patentansprüche

1. Dualband-Transceiver umfassend:
- eine Basisband- und Modulationseinheit (1),
- mindestens eine erste Frequenzwandlungseinheit (2, 3) und
- mindestens eine Antenne (4, 5) zum Senden in einem ersten oder zweiten Übertragungsfrequenzband (RF1, RF2), wobei das erste Übertragungsfrequenzband (RF1) des Dualband-Transceivers der Zwischenfrequenz (IF2) des zweiten Übertragungsfrequenzbandes (RF2) entspricht,
**dadurch gekennzeichnet, dass**
- die erste Frequenzwandlungseinheit (2) zwischen der Basisband- und Modulationseinheit (1) und der mindestens einen Antenne (4, 5) angeschlossen ist und ausgebildet ist, um eine erste Zwischenfrequenz (IF1), die von der Basisband- und Modulationseinheit (1) ausgegeben wird, in die Zwischenfrequenz (IF2) des zweiten Übertragungsfrequenzbandes (RF2) zu wandeln, und
- eine Steuereinheit (8) vorgesehen ist, um ein Umschalten zwischen dem ersten Übertragungsfrequenzband (RF1) und dem zweiten Übertragungsfrequenzband (RF2) zu steuern, und die Steuereinheit (8) mit der Basisband- und Modulationseinheit (1) verbunden ist, um die Modulationsparameter der Basisband- und Modulationseinheit (1) gleichzeitig mit dem Umschalten zwischen dem ersten Übertragungsfrequenzband (RF1) und dem zweiten Übertragungsfrequenzband (RF2) ändern zu können,
wobei das erste Übertragungsfrequenzband (RF1) einem Nichtsichtlinien-Frequenzband und das zweite Übertragungsfrequenzband (RF2) einem Sichtlinien-Frequenzband entspricht,
wobei die Sichtlinien-Übertragung eine höhere Datenrate verarbeiten kann als die Nichtsichtlinien-Übertragung.

2. Dualband-Transceiver nach Anspruch 1, **dadurch gekennzeichnet, dass** ein erster Umschalter (6) der ersten Frequenzwandlungseinheit (2) nachgeschaltet vorgesehen ist, wobei der erste Umschalter (6) durch die Steuereinheit (8) gesteuert ist, so dass wahlweise entweder ein Signal in dem ersten Übertragungsfrequenzband (RF1) oder dem zweiten Übertragungsfrequenzband (RF2) übertragen/empfangen wird.

3. Dualband-Transceiver gemäß Anspruch 2, **dadurch gekennzeichnet, dass** die Steuereinheit (8) ausgebildet ist, den ersten Umschalter (6) auf Basis der Kanalqualität, Kanalverfiigbarkeit, der Bitfehlerrate der Übertragung und/oder Benutzerpräferenzen zu steuern.

4. Dualband-Transceiver gemäß einem der vorangehenden Ansprüche, **dadurch gekennzeichnet, dass** die Frequenz des ersten Übertragungsfrequenzbandes (RF 1) unter 10 GHz liegt und die Frequenz des zweiten Übertragungsfrequenzbandes (RF2) mehr als 10 GHz beträgt.

5. Dualband-Transceiver nach Anspruch 4, **dadurch gekennzeichnet, dass** die Frequenz des ersten Übertragungsfrequenzbandes (RF1) 800 MHz, 2,4 GHz oder zwischen 5 und 6 GHz beträgt und die Frequenz des zweiten Übertragungsfrequenzbandes (RF2) 17 GHz, 24 GHz, 40 GHz oder 60 GHz beträgt.

6. Dualband-Transceiver nach einem der vorangehenden Ansprüche, **dadurch gekennzeichnet, dass** ein zweiter Umschalter (9) vorgesehen ist, um die von der Basisband- und Modulationseinheit (1) verwendete Modulationstechnik zu steuern, wobei die Steuereinheit (8) ausgebildet ist, um den zweiten Umschalter (9) gleichzeitig mit dem ersten Umschalter (6) zu steuern.

7. Dualband-Transceiver nach einem der vorangehenden Ansprüche, **dadurch gekennzeichnet, dass** die Steuereinheit (8) ausgebildet ist, um die von der Basisbandeinheit (1) verwendete Modulationstechnik gemäß einer Änderung des verwendeten Übertragungsfrequenzbandes (RF1, RF2) zu ändern.

8. Dualband-Transceiver nach Anspruch 7, **dadurch gekennzeichnet, dass** die Spektraleffizienz der Übertragung in dem ersten Übertragungsfrequenzband (RF1) größer ist als die Spektraleffizienz der Übertragung in dem zweiten Übertragungsfrequenzband (RF2).

9. Dualband-Transceiver nach Anspruch 7 oder 8, **dadurch gekennzeichnet, dass** die Steuereinheit (8) ausgebildet ist, um die Basisband- und Modulationseinheit (1) so zu steuern, dass eine (D)8PSK oder (D)QPSK Modulation verwendet wird, wenn die Steuereinheit (8) den Umschalter (6) so steuert, dass das erste Übertragungsfrequenzband (RF 1) verwendet wird.

10. Dualband-Transceiver nach einem der Ansprüche 7 bis 9, **dadurch gekennzeichnet, dass** die Steuereinheit (8) ausgebildet ist, um die Basisband- und Modulationseinheit (1) so zu steuern, dass eine (D)8PSK-, (D)QPSK-, 16QAM- oder 64QAM-Modulation verwendet wird, wenn die Steuereinheit (8) den Umschalter (6) so steuert, dass das zweite Übertragungsfrequenzband (RF2) verwendet wird.

11. Dualband-Transceiver nach einem der Ansprüche 7 bis 10, **dadurch gekennzeichnet, dass** die Steuereinheit (8) ausgebildet ist, um den zweiten Umschalter (9) und den Umschalter (6) so zu steuern, dass die resultierende Übertragungskanalbandbreite konstant bleibt.

12. Dualband-Transceiver nach einem der vorangehenden Ansprüche, **dadurch gekennzeichnet, dass** ein dritter Umschalter (10) vorgesehen ist, um den Leistungspegel von mindestens einer der Frequenzwandlungseinheiten (2, 3) zu steuern, wobei der dritte Umschalter (10) durch die Steuereinheit (8) gesteuert ist.

13. Dualband-Transceiver nach einem der vorangehenden Ansprüche, **dadurch gekennzeichnet, dass** die Basisband- und Modulationseinheit (1) ausgebildet ist, um gemäß einer OFDM Modulationstechnik zu arbeiten.

14. Dualband-Transceiver nach einem der vorangehenden Ansprüche, **dadurch gekennzeichnet, dass** die Verwendung von jeweils verschiedenen Antennensystemen (4, 5) vorgesehen ist, wenn das erste oder zweite Übertragungsfrequenzband (RF1, RF2) verwendet wird.

15. Dualband-Transceiver nach Anspruch 14, **dadurch gekennzeichnet, dass** die verschiedenen Antennensysteme (4, 5) verschiedene Antennengewinne aufweisen.

16. Dualband-Übertragungsverfahren mit den folgenden Schritten:
Modulation (1) von über eine erste Zwischenfrequenz (IF1) zu übertragenden Daten in einer Basisband- und Modulationseinheit (1), um ein moduliertes Signal zu erhalten, und
Übertragung (4, 5) des in einem ersten oder einem zweiten Übertragungsfrequenzband (RF1, RF2) modulierten Signals, wobei das erste Übertragungsfrequenzband (RF1) eine Zwischenfrequenz (IF2) des zweiten Übertragungsfrequenzbandes (RF2) ist,
**gekennzeichnet durch**
- mindestens eine Aufwärts-Konvertierung (2, 3) des mit der ersten Zwischenfrequenz (IF1) modulierten Signals zu einer zweiten Zwischenfrequenz (IF2) und
- einem Umschalten zwischen dem ersten Übertragungsfrequenzband (RF1) und dem zweiten Übertragungsfrequenzband (RF2), wobei das Umschalten gleichzeitig mit einer Änderung der Modulationsparameter der Basisband- und Modulationseinheit (1) durchgeführt wird, wobei das erste Übertragungsfrequenzband (RF 1) einem Nichtsichtlinien-Frequenzband und das zweite Übertragungsfrequenzband (RF2) einem Sichtlinien-Frequenzband entspricht,
wobei die Sichtlinien-Übertragung eine höhere Datenrate als die Nichtsichtlinien-Übertragung verarbeiten kann.

17. Dualband-Übertragungsverfahren nach Anspruch 16, **gekennzeichnet durch** den weiteren Schritt des
wahlweisen Steuerns (6, 8) des Aufwärts-Konvertierungs-Schrittes bzw. der Aufwärts-Konvertierungs-Schritte, so dass wahlweise entweder ein Signal in dem ersten Übertragungsfrequenzband (RF1) oder dem zweiten Übertragungsfrequenzband (RF2) übertragen wird.

18. Dualband-Übertragungsverfahren nach einem der Ansprüche 16 oder 17, **gekennzeichnet dadurch, dass** der Schritt des wahlweisen Steuerns (6, 8) auf Basis der Kanalqualität, Kanalverfügbarkeit, der Bitfehlerrate der Übertragung und/oder von Benutzerpräferenzen durchgeführt wird.

19. Dualband-Übertragungsverfahren nach einem der Ansprüche 16 bis 18, **dadurch gekennzeichnet, dass** die Frequenz des ersten Übertragungsfrequenzbandes (RF1) weniger als 10 GHz und die Frequenz des zweiten Übertragungsfrequenzbandes (RF2) mehr als 10 GHz beträgt.

20. Dualband-Übertragungsverfahren nach Anspruch 19, **dadurch gekennzeichnet, dass** die Frequenz des ersten Übertragungsfrequenzbandes (RF1) 800 MHz, 2,4 GHz oder zwischen 5 und 6 GHz beträgt und die Frequenz des zweiten Übertragungsfrequenzbandes (RF2) 17 GHz, 24 GHz, 40 GHz oder 60 GHz beträgt.

21. Dualband-Übertragungsverfahren nach einem der Ansprüche 16 bis 20, mit dem weiteren Schritt des Steuerns (8, 9) der Basisband- und Modulationseinheit (1), so dass die von der Basisband- und Modulationseinheit (1) verwendete Modulationstechnik gleichzeitig mit der wahlweisen Steuerung (6, 8) des Aufwärts-Konvertierungs-Schrittes bzw. der Aufwärts-Konvertierungs-Schritte gleichzeitig geändert wird.

22. Dualband-Übertragungsverfahren nach einem der Ansprüche 16 bis 21, **dadurch gekennzeichnet, dass** eine Steuerung (8, 9) der Basisband- und Modulationseinheit (1) so durchgeführt wird, dass die von der Basisbandeinheit (1) verwendete Modulationstechnik gemäß einer Änderung des verwendeten Übertragungsfrequenzbandes (RF1, RF2) geändert wird.

23. Dualband-Übertragungsverfahren nach Anspruch 22, **dadurch gekennzeichnet, dass** die Steuerung (8, 9) der Basisband- und Modulationseinheit (1) so durchgeführt wird, dass eine (D)8PSK-oder (D)QPSK-Modulation verwendet wird, wenn das erste Übertragungsfrequenzband (RF1) für die Übertragung verwendet wird.

24. Dualband-Übertragungsverfahren nach einem der Ansprüche 22 oder 23, **dadurch gekennzeichnet, dass** die Steuerung (8, 9) der Basisband- und Modulationseinheit (1) so durchgeführt wird, dass eine (D)8PSK-, (D)QPSK-, 16QAM- oder 64QAM-Modulation verwendet wird, wenn das zweite Übertragungsfrequenzband (RF2) für die Übertragung verwendet wird.

25. Dualband-Übertragungsverfahren nach einem der Ansprüche 21 bis 24, **dadurch gekennzeichnet, dass** die Steuerung (8, 9) der Basisband- und Modulationseinheit (1) und die Steuerung (6, 8) des Aufwärts-Konvertierungs-Schrittes bzw. der Aufwärts-Konvertierungs-Schritte so durchgeführt wird, dass die resultierende Übertragungskanalbandbreite konstant bleibt.

26. Dualband-Übertragungsverfahren nach einem der Ansprüche 16 bis 25, **gekennzeichnet durch** den Schritt des Steuerns (10) des Leistungspegels eines Aufwärts-Konvertierungs-Schrittes (2, 3).

27. Dualband-Übertragungsverfahren nach einem der Ansprüche 16 bis 26, **dadurch gekennzeichnet, dass** die Basisband- und Modulationseinheit (1) gemäß einer OFDM-Modulationstechnik arbeitet.

28. Dualband-Übertragungsverfahren nach einem der Ansprüche 16 bis 27, **dadurch gekennzeichnet, dass** jeweils verschiedene Antennen (4, 5) verwendet werden, wenn das erste oder das zweite Übertragungsfrequenzband (RF1, RF2) verwendet wird.

## Revendications

1. Émetteur-récepteur bibande, comprenant :
- un bloc de bande de base et de modulation (1),
- au moins un premier bloc de conversion de fréquence (2, 3) et
- au moins une antenne (4, 5) destinée à transmettre dans une première ou une seconde bande de fréquence de transmission (RF1, RF2),
dans lequel la première bande de fréquence de transmission (RF1) de l'émetteur-récepteur bibande correspond à la fréquence intermédiaire (IF2) de la seconde bande de fréquence de transmission (RF2),
**caractérisé en ce que**
- le premier bloc de conversion de fréquence (2) est relié entre le bloc de bande de base et de modulation (1) et au moins une antenne (4, 5) et est adapté pour convertir une première fréquence intermédiaire (IF1) sortie du bloc de bande de base et de modulation (1) en la fréquence intermédiaire (IF2) de la seconde bande de fréquence de transmission (RF2), et
- une unité de commande (8) est prévue pour commander une commutation entre la première bande de fréquence de transmission (RF1) et la seconde bande de fréquence de transmission (RF2) et l'unité de commande (8) est reliée au bloc de bande de base et de modulation (1) pour être capable de changer des paramètres de modulation du bloc de bande de base et de modulation (1) de manière simultanée avec la commutation entre la première bande de fréquence de transmission (RF1) et la seconde bande de fréquence de transmission (RF2),
la première bande de fréquence de transmission (RF1) étant une bande non à distance à vue et la seconde bande de fréquence de transmission (RF2) étant une bande à distance à vue, où la transmission à distance à vue peut soutenir un débit de données supérieur à la transmission non à distance à vue.

2. Émetteur-récepteur bibande selon la revendication 1,
**caractérisé en ce qu'**un premier commutateur (6) est prévu vers le bas du premier bloc de conversion de fréquence (2), le premier commutateur (6) étant commandé par l'unité de commande (8) de sorte qu'un signal dans la première bande de fréquence de transmission (RF1) ou dans la seconde bande de fréquence de transmission (RF2) soit transmis/reçu sélectivement.

3. Émetteur-récepteur bibande selon la revendication 2,
**caractérisé en ce que** l'unité de commande (8) est adaptée pour commander le premier commutateur (6) sur la base d'une qualité de canal, d'une disponibilité de canal, du taux d'erreur binaire de la transmission et/ou de préférences utilisateur.

4. Émetteur-récepteur bibande selon l'une quelconque des revendications précédentes,
**caractérisé en ce que** la première bande de fréquence de transmission (RF1) est inférieure à 10 GHz et la seconde bande de fréquence de transmission (RF2) est supérieure à 10 GHz.

5. Émetteur-récepteur bibande selon la revendication 4,
**caractérisé en ce que** la première bande de fréquence de transmission (RF1) est de 800 MHz, 2,4 GHz ou entre 5 et 6 GHz et la seconde bande de fréquence de transmission (RF2) est de 17 GHz, 24 GHz, 40 GHz ou 60 GHz.

6. Émetteur-récepteur bibande selon l'une quelconque des revendications précédentes,
**caractérisé en ce qu'**un second commutateur (9) est prévu pour commander la technique de modulation utilisée par le bloc de bande de base et de modulation (1), l'unité de commande (8) étant adaptée pour commander le second commutateur (9) de manière simultanée avec le premier commutateur (6).

7. Émetteur-récepteur bibande selon l'une quelconque des revendications précédentes,
**caractérisé en ce que** l'unité de commande (8) est adaptée pour changer la technique de modulation utilisée par le bloc de bande de base (1) conformément à un changement de la bande de fréquence de transmission (RF1, RF2) utilisée.

8. Émetteur-récepteur bibande selon la revendication 7,
**caractérisé en ce que** le rendement spectral de la transmission dans la première bande de fréquence de transmission (RF1) est supérieur au rendement spectral de la transmission dans la seconde bande de fréquence de transmission (RF2).

9. Émetteur-récepteur bibande selon la revendication 7 ou 8,
**caractérisé en ce que** l'unité de commande (8) est adaptée pour commander le bloc de bande de base et de modulation (1) de sorte qu'une modulation (D)8PSK ou (D)QPSK soit utilisée lorsque l'unité de commande (8) commande le commutateur (6) de sorte que la première bande de fréquence de transmission (RF1) soit utilisée.

10. Émetteur-récepteur bibande selon l'une quelconque des revendications 7 à 9,
**caractérisé en ce que** l'unité de commande (8) est adaptée pour commander le bloc de bande de base et de modulation (1) de sorte qu'une modulation (D)8PSK, (D)QPSK, 16QAM ou 64QAM soit utilisée lorsque l'unité de commande (8) commande le commutateur (6) de sorte que la seconde bande de fréquence de transmission (RF2) soit utilisée.

11. Émetteur-récepteur bibande selon l'une quelconque des revendications 7 à 10,
**caractérisé en ce que** l'unité de commande (8) est adaptée pour commander le second commutateur (9) et le commutateur (6) de sorte que la bande passante résultante du canal de transmission reste constante.

12. Émetteur-récepteur bibande selon l'une quelconque des revendications précédentes,
**caractérisé en ce qu'**un troisième commutateur (10) est prévu pour commander le niveau de puissance d'au moins l'un des blocs de conversion de fréquence (2, 3), le troisième commutateur (10) étant commandé par l'unité de commande (8).

13. Émetteur-récepteur bibande selon l'une quelconque des revendications précédentes,
**caractérisé en ce que** le bloc de bande de base et de modulation (1) est adapté pour fonctionner selon une technique de modulation OFDM.

14. Émetteur-récepteur bibande selon l'une quelconque des revendications précédentes,
**caractérisé en ce que** différents systèmes d'antenne (4, 5) sont prévus pour être utilisés respectivement lorsque la première ou la seconde bande de fréquence de transmission (RF1, RF2) est utilisée.

15. Émetteur-récepteur bibande selon la revendication 14,
**caractérisé en ce que** les différents systèmes d'antenne (4, 5) comprennent différents gains d'antenne.

16. Procédé de transmission bibande,
comprenant les étapes suivantes consistant en :
- la modulation (1) de données à transmettre sur une première fréquence intermédiaire (IF1) pour obtenir un signal modulé, dans un bloc de bande de base et de modulation (1), et
- la transmission (4, 5) du signal modulé dans une première ou une seconde bande de fréquence de transmission (RF1, RF2), la première bande de fréquence de transmission (RF1) étant une fréquence intermédiaire (IF2) de la seconde bande de fréquence de transmission (RF2),
**caractérisé par**
- au moins une conversion montante (2, 3) du signal modulé avec la première fréquence intermédiaire (IF1) en une seconde fréquence intermédiaire (IF2), et
- une commutation entre la première bande de fréquence de transmission (RF1) et la seconde bande de fréquence de transmission (RF2), la commutation étant effectuée de manière simultanée avec un changement de paramètres de modulation du bloc de bande de base et de modulation (1),
la première bande de fréquence de transmission (RF1) étant une bande non à distance à vue et la seconde bande de fréquence de transmission (RF2) étant une bande à distance à vue, où la transmission à distance à vue peut soutenir un débit de données supérieur à la transmission non à distance à vue.

17. Procédé de transmission bibande selon la revendication 16, **caractérisé par** l'étape consistant à
commander sélectivement (6, 8) l'(les) étape(s) de conversion montante de sorte qu'un signal dans la première bande de fréquence de transmission (RF1) ou dans la seconde bande de fréquence de transmission (RF2) soit transmis sélectivement.

18. Procédé de transmission bibande selon l'une quelconque des revendications 16 ou 17,
**caractérisé en ce que** l'étape de commande sélective (6, 8) est effectuée sur la base d'une qualité de canal, d'une disponibilité de canal, du taux d'erreur binaire de la transmission et/ou de préférences utilisateur.

19. Procédé de transmission bibande selon l'une quelconque des revendications 16 à 18,
**caractérisé en ce que** la première bande de fréquence de transmission (RF1) est inférieure à 10 GHz et la seconde bande de fréquence de transmission (RF2) est supérieure à 10 GHz.

20. Procédé de transmission bibande selon la revendication 19,
**caractérisé en ce que** la première bande de fréquence de transmission (RF1) est de 800 MHz, 2,4 GHz ou entre 5 et 6 GHz et la seconde bande de fréquence de transmission (RF2) est de 17 GHz, 24 GHz, 40 GHz ou 60 GHz.

21. Procédé de transmission bibande selon l'une quelconque des revendications 16 à 20,
comprenant l'étape consistant à commander (8, 9) le bloc de bande de base et de modulation (1) de sorte que la technique de modulation utilisée par le bloc de bande de base et de modulation (1) est changée de manière simultanée avec la commande sélective (6, 8) de(s) l'étape(s) de conversion montante.

22. Procédé de transmission bibande selon l'une quelconque des revendications 16 à 21,
**caractérisé en ce qu'**une commande (8, 9) du bloc de bande de base et de modulation (1) est effectuée de sorte que la technique de modulation utilisée par le bloc de bande de base (1) est changée conformément à un changement de la bande de fréquence de transmission (RF1, RF2) utilisée.

23. Procédé de transmission bibande selon la revendication 22,
**caractérisé en ce que** la commande (8, 9) du bloc de bande de base et de modulation (1) est effectuée de sorte qu'une modulation (D)8PSK ou (D)QPSK soit utilisée lorsque la première bande de fréquence de transmission (RF1) est utilisée pour la transmission.

24. Procédé de transmission bibande selon l'une quelconque des revendications 22 ou 23,
**caractérisé en ce que** la commande (8, 9) du bloc de bande de base et de modulation (1) est effectuée de sorte qu'une modulation (D)8PSK, (D)QPSK, 16QAM ou 64QAM soit utilisée lorsque la seconde bande de fréquence de transmission (RF2) est utilisée pour la transmission.

25. Procédé de transmission bibande selon l'une quelconque des revendications 21 à 24,
**caractérisé en ce que** la commande (8, 9) du bloc de bande de base et de modulation (1) et la commande (6, 8) de(s) l'étape(s) de conversion montante sont effectuées de sorte que la bande passante résultante du canal de transmission reste constante.

26. Procédé de transmission bibande selon l'une quelconque des revendications 16 à 25,
**caractérisé par** l'étape consistant à commander (10) le niveau de puissance d'une étape de conversion montante (2, 3).

27. Procédé de transmission bibande selon l'une quelconque des revendications 16 à 26,
**caractérisé en ce que** le bloc de bande de base et de modulation (1) fonctionne selon une technique de modulation OFDM.

28. Procédé de transmission bibande selon l'une quelconque des revendications 16 à 27,
**caractérisé en ce que** différentes antennes (4, 5) sont utilisées respectivement lorsque la première ou la seconde bande de fréquence de transmission (RF1, RF2) est utilisée.
